# EUROPÄISCHE PATENTSCHRIFT

(11) **EP 0 706 914 B1**
(45) Veröffentlichungstag und Bekanntmachung des Hinweises auf die Patenterteilung: **21.06.2000**
(21) Anmeldenummer: 95115589.4
(22) Anmeldetag: 04.10.1995
(51) Int. Cl.: B60R 16/02

(54) **Vorrichtung zur Signalübertragung zwischen zwei Endstellen**
Device for signal transmission between two extremities
Dispositif pour la transmission de signaux entre deux extremités

(30) Priorität: 15.10.1994 DE 4436972
(43) Veröffentlichungstag der Anmeldung: 17.04.1996
(73) Patentinhaber: ALCATEL, 75008 Paris (FR)
(72) Erfinder: Schauer, Friedrich, D-90562 Heroldsberg (DE)
(74) Vertreter: Döring, Roger, Dipl.-Ing.

(56) Entgegenhaltungen:
- US-A- 5 219 460
- US-A- 5 224 871

## Beschreibung

Die Erfindung bezieht sich auf eine Vorrichtung zur Signalübertragung zwischen zwei Endstellen, von denen mindestens eine relativ zu der anderen bewegbar ist und die durch mindestens eine in Windungen verlaufende Leitung verbunden sind, an welche an den beiden Endstellen weiterführende Leitungen anschließbar sind, bei welcher die Leitung in einer im wesentlichen kreisringförmig ausgebildeten Kassette untergebracht ist, die aus einem eine der Endstellen tragenden Stator und aus einem um ihre Achse und gegenüber dem Stator drehbaren, die andere Endstelle tragenden Rotor besteht, bei welcher die Windungen der Leitung in einen inneren Wickelbereich und einen äußeren Wickelbereich mit unterschiedlicher Wickelrichtung unterteilt sind, zwischen denen eine etwa U-förmig ausgebildete Umkehrstelle liegt, bei welcher zwischen den beiden Wickelbereichen ein einteiliger, ringförmig gestalteter und die Umkehrstelle der Windungen umfassender Führungskörper angebracht ist, der in Umfangsrichtung der Kassette bewegbar ist und bei dem zumindest die innere Umfangsfläche als Anlage für die Windungen des inneren Wickelbereichs ausgebildet ist, und bei welcher die innere Umfangsfläche des Führungskörpers über den ganzen Umfang verteilt radial nach außen vorstehende und in Umfangsrichtung gegeneinander versetzte Vorsprünge hat (US-A-5 219 460).

Eine derartige Vorrichtung wird beispielsweise für die Übertragung eines Signals zum Auslösen des "Airbag" eines Prallschutzes für Kraftfahrzeuge benötigt. Sie ist zur Übertragung eines elektrischen oder optischen Signals im Lenkrad eines Kraftfahrzeugs untergebracht. "Leitung" im Sinne der Erfindung kann also eine elektrische oder eine optische Leitung sein. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach der EP-A-0 417 350 wird für die Signalübertragung elektrischer Strom verwendet. Die Stromübertragung erfolgt durch eine nach Art eines Federhauses zu einem Wickelkörper gewickelte und in einer Kassette untergebrachte Flachband-Leitung - im folgenden kurz als "FBL" bezeichnet. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Die FBL kann so die Drehbewegungen eines Lenkrads mitmachen, ohne daß der Signalpfad unterbrochen wird. Damit in beiden Drehrichtungen eine ausreichende Anzahl von Umdrehungen durchgeführt werden kann, wird eine entsprechend lange FBL benötigt, die in einer großen Anzahl von Windungen in der Kassette liegt. Diese Vorrichtung ist prinzipiell in der Praxis einsetzbar. Wegen der großen Länge der Leitung und deren relativ hohem ohmschen Widerstand können aber insbesondere bei geringen Stromstärken für die zu übertragenden Signale Schwierigkeiten auftreten.

Die DE-A-4 211 264 beschreibt eine Vorrichtung, bei welcher die Länge einer zwischen zwei Endstellen eingesetzten Leitung wesentlich kürzer als bei der im Vorangehenden geschilderten Vorrichtung ist. Die gewickelte Leitung ist in einen inneren und einen äußeren Wickelbereich unterteilt, in denen die Windungen unterschiedliche Wickelrichtung haben. Die beiden Wickelbereiche sind durch eine etwa U-förmige Umkehrstelle miteinander verbunden. Zwischen den beiden Wickelbereichen liegt ein die Umkehrstelle umfassender, ringförmiger Führungskörper, der in Umfangsrichtung der Kassette bewegbar ist. Er wird durch die gewickelte Leitung bzw. durch deren Umkehrstelle bewegt, wenn der Rotor der Kassette gedreht wird. Der Führungskörper weist mehrere, in Umfangsrichtung gegeneinander versetzte und jeweils um eine Achse drehbare Rollen auf, an denen sowohl vom inneren Wickelbereich als auch vom äußeren Wickelbereich jeweils eine Windung der Leitung anliegt, wenn der Rotor gedreht wird. Die Rollen verhindern, daß die Windung des inneren Bereichs sich zu fest an den Führungskörper anlegt, der dadurch blockiert wäre. Der Führungskörper dieser bekannten Vorrichtung ist insbesondere wegen der jeweils gesondert gelagerten Rollen aufwendig.

Die Vorrichtung nach der eingangs erwähnten US-A-5 219 460 ist gegenüber der Vorrichtung nach der DE-A-4 211 264 einfacher gestaltet. Ein Blockieren der Windung der Leitung des inneren Wickelbereichs soll hier durch in axialer Richtung verlaufende Rippen verhindert werden, die an der inneren Umfangsfläche des Führungskörpers mit Abstand zu einander angeformt sind.

Der Erfindung liegt die Aufgabe zugrunde, die eingangs geschilderte Vorrichtung weiter zu vereinfachen.

Diese Aufgabe wird gemäß der Erfindung dadurch gelöst, daß an den Vorsprüngen radial vorstehende Kugelkalotten angebracht sind.

Der Führungskörper dieser Vorrichtung ist einteilig und daher einfach aufgebaut. Er besteht vorzugsweise aus Kunststoff und kann beispielweise durch Spritzgießen in einem Arbeitsgang hergestellt werden. Durch die an den Vorsprüngen angebrachten Kugelkalotten ergibt sich eine immer wieder unterbrochene Umfangsfläche des Führungskörpers mit wenigen, sehr kleinen Anlageflächen bzw. Anlagepunkten für die jeweilige Windung der Leitung. Der Führungskörper verhindert dadurch beim Drehen des Rotors wirksam ein Auswandern der Windungen in radialer Richtung, ohne daß die Gefahr besteht, daß die jeweilige Windung mit dem Führungskörper verklemmt. Das ist von wesentlicher Bedeutung für den inneren Wickelbereich, wenn dessen Windungen in der einen Drehrichtung des Rotors "aufgehen" und dabei den Führungskörper schieben. Die gegeneinander versetzten, mit den Kugelkalotten ausgerüsteten Vorsprünge ermöglichen ein Ausbiegen der am Führungskörper anliegenden Windung zwischen je zwei Kugelkalotten, so daß dieselbe immer relativ lose bleibt und nicht auf einer größeren Länge satt am Führungskörper anliegen kann.

Ein Ausführungsbeispiel des Erfindungsgegenstandes ist in den Zeichnungen dargestellt.

Es zeigen:

Fig. 1 eine Ansicht einer Kassette zur Signalübertragung in schematischer Darstellung.

Fig. 2 einen in der Kassette verwendbaren Führungskörper.

Fig. 3 eine Seitenansicht des Führungskörpers nach Fig. 2.

Die Erfindung wird im folgenden für eine Vorrichtung beschrieben, in deren Kassette eine Flachbandleitung (FBL) mit elektrischen Leitern angebracht ist. Statt der FBL könnte aber auch eine Leitung mit mindestens einem Lichtleiter eingesetzt werden. Auch eine kombinierte Leitung mit elektrischen und optischen Leitern könnte verwendet werden. Es ist prinzipiell auch möglich, zwei oder mehr Leitungen in der Kassette anzuordnen. Stellvertretend für alle anderen Möglichkeiten wird im folgenden von nur einer FBL mit elektrischen Leitern ausgegangen.

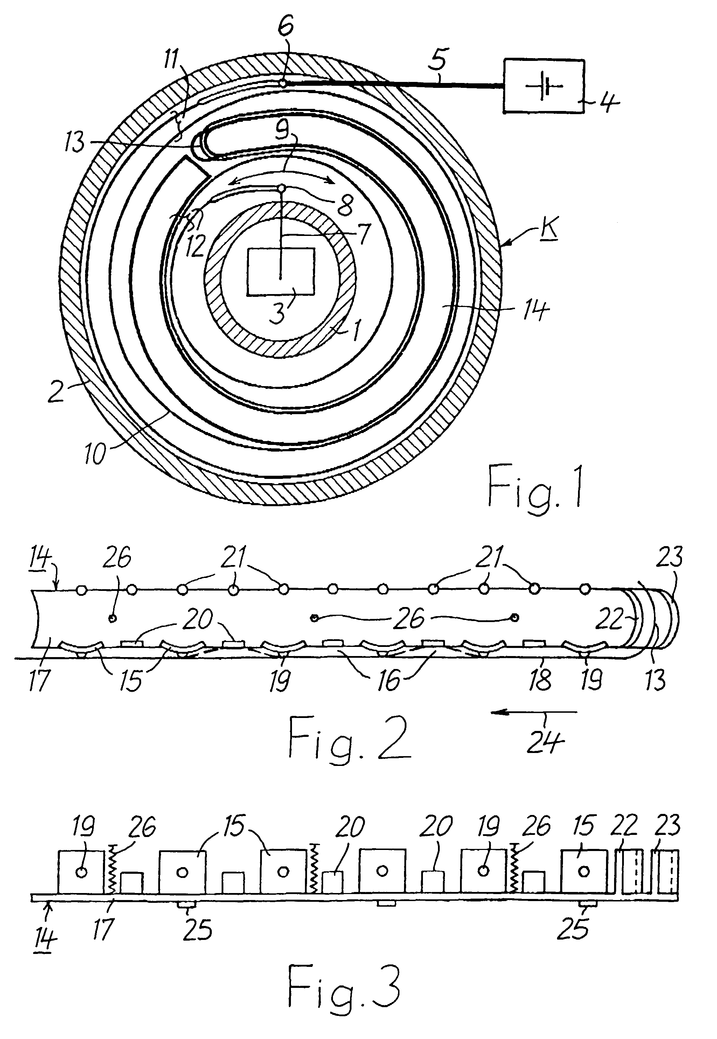

In Fig. 1 sind schematisch zwei beispielsweise kreisförmig ausgebildete Wände 1 und 2 einer im wesentlichen kreisringförmigen Kassette K dargestellt. Sie ist für den Einbau in das Lenkrad eines Kraftfahrzeugs bestimmt. Die Wand 1 soll im dargestellten Ausführungsbeispiel zum Rotor der Kassette K gehören, während die Wand 2 Teil des Stators derselben ist. Zur Stromversorgung einer Elektronik 3, durch deren Signal ein Prallsack ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine FBL 10 mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses an den Endstellen 6 und 8 sind nicht genauer dargestellt. Sie sind prinzipiell in unterschiedlichen Varianten bekannt und hier nicht von Bedeutung.

Die FBL 10 ist gemäß Fig. 1 in der Kassette K zwischen den beiden Endstellen 6 und 8 in Windungen angeordnet, die in einen äußeren Wickelbereich 11 und einen inneren Wickelbereich 12 unterteilt sind. Die beiden Wickelbereiche 11 und 12 sind durch Klammern gekennzeichnet. Sie umfassen in der aus Fig. 1 ersichtlichen Mittelstellung bzw. in der Montageposition der Kassette K jeweils zwei bis drei Windungen. In den beiden Wickelbereichen 11 und 12 haben die Windungen der FBL 10 entgegengesetzte Wickelrichtungen. Die Wickelbereiche 11 und 12 sind durch eine etwa U-förmig ausgeführte Umkehrstelle 13 miteinander verbunden. Zwischen den beiden Wickelbereichen 11 und 12 ist ein einteiliger, ringförmig ausgeführter Führungskörper 14 angebracht, der die Umkehrstelle 13 umfaßt.

Der Führungskörper 14 ist in Umfangsrichtung der Kassette K, also in Richtung des Doppelpfeils 9, leicht beweglich. Er kann als geschlossener Ring mit einem Durchlaß für die Umkehrstelle 13 der FBL 10 ausgeführt sein. Er kann aber auch ein offener Ring sein, der sich nahezu über 360° erstreckt, so wie es in Fig. 1 dargestellt ist. Der Führungskörper 14 besteht vorzugsweise aus Kunststoff. Er ist dadurch sehr leicht, so daß er leichtgängig und nahezu geräuschfrei in der Kassette K bewegt werden kann. Die genauere Ausgestaltung des Führungskörpers 14 geht aus den Fig. 2 und 3 hervor. Dabei ist der an sich ringförmige Führungskörper 14 der Einfachheit halber als gestrecktes Gebilde dargestellt.

Gemäß Fig. 2 hat der Führungskörper 14 auf seiner in Montageposition dem inneren Wickelbereich 12 zugewandten Innenseite Vorsprünge 15, die durch Zwischenräume 16 voneinander getrennt sind. Die Vorsprünge 15 sind durch einen gemeinsamen, über die ganze Länge des Führungskörpers 14 verlaufenden Träger 17 miteinander verbunden. Sie ragen in radialer Richtung über den Träger 17 hinaus und sind vorzugsweise konvex gebogen. Die Höhe der Vorsprünge 15 entspricht der Höhe der FBL 10. An den Vorsprüngen 15 sind außerdem nach außen abstehende Kugelkalotten 19 angebracht, durch welche sehr kleine Anlageflächen gebildet werden. Für die in Fig. 2 eingezeichnete Windung 18 des inneren Wickelbereichs 12, welche an den Kugelkalotten 19 anliegt, ergibt sich dadurch resultierend eine nur kleine Anlagefläche. Die Vorsprünge 15 können auch insgesamt als Kugelkalotten ausgeführt sein.

Die Zwischenräume 16 zwischen je zwei Vorsprüngen 15 sind so bemessen, daß die Windung 18 - wie in Fig. 2 gestrichelt angedeutet - zwar in dieselben eindringen, jedoch nicht durch dieselben hindurchtreten kann. Das kann durch einen ausreichend kleinen Abstand der Vorsprünge 15 voneinander erreicht werden. Es können in den Zwischenräumen 16 aber auch zum Führungskörper 14 gehörende Sperrelemente 20 vorgesehen werden, die ebenfalls am Träger 17 angebracht sind.

Auf der dem äußeren Wickelbereich 11 zugewandten Außenseite des Führungskörpers 14 können ebenfalls durch Zwischenräume getrennte Vorsprünge und Sperrelemente angebracht sein. Hier reicht es aber aus, wenn über die ganze Länge des Führungskörpers 14 verteilt beispielsweise Zapfen 21 angeordnet werden, da im äußeren Wickelbereich 11 nicht die Gefahr besteht, daß eine Windung der FBL 10 mit dem Führungskörper 14 verklemmt. Der Führungskörper 14 braucht hier nur ein radiales Auswandern der Windungen des äußeren Wickelbereichs 11 zu verhindern.

Der Führungskörper 14 wird in der Kassette K entsprechend Fig. 1 so angeordnet, daß er zwischen den beiden Wickelbereichen 11 und 12 liegt. Er umfaßt in Montageposition die Umkehrstelle 13 der FBL 10, so daß er bei einer in Umfangsrichtung der Kassette K gerichteten Bewegung der Umkehrstelle 13 zusammen mit bzw. von dieser bewegt wird. Dazu können am Träger 17 des Führungskörpers 14 zwei durch einen Zwischenraum voneinander getrennte Wände 22 und 23 angebracht sein, zwischen denen die Umkehrstelle 13 der FBL 10 liegt. Bei Drehung des Rotors der Kassette K in der einen Drehrichtung liegt die Umkehrstelle 13 an der Wand 22 an. Sie zieht dann den Führungskörper 14 in Richtung des Pfeiles 24. In der anderen Drehrichtung des Rotors der Kassette K kommt die Umkehrstelle 13 zur Anlage an der Wand 23. Sie schiebt dann den Führungskörper 14 in Gegenrichtung zum Pfeil 24.

Um eine geräuscharme Bewegung des Führungskörpers 14 in der Kassette K sicherzustellen, können an einer Anlageseite desselben kleinflächige Noppen 25 angebracht sein. Für die Abstützung bzw. Anlage an der gegenüberliegenden Fläche der Kassette K können federnde Elemente 26 am Träger 17 angebracht sein. Noppen 25 und federnde Elemente 26 sind gleichmäßig über die Länge des Führungskörpers 14 verteilt. Zweckmäßig sind die Noppen 25 gegenüber den federnden Elementen 26 in Umfangsrichtung versetzt.

## Patentansprüche

1. Vorrichtung zur Signalübertragung zwischen zwei Endstellen (6,8), von denen mindestens eine relativ zu der anderen bewegbar ist und die durch mindestens eine in Windungen verlaufende Leitung (10) verbunden sind, an welche an den beiden Endstellen (6,8) weiterführende Leitungen (5,7) anschließbar sind, bei welcher die Leitung (10) in einer im wesentlichen kreisringförmig ausgebildeten Kassette (K) untergebracht ist, die aus einem eine der Endstellen tragenden Stator und aus einem um ihre Achse und gegenüber dem Stator drehbaren, die andere Endstelle tragenden Rotor besteht, bei welcher die Windungen der Leitung (10) in einen inneren Wickelbereich (12) und einen äußeren Wickelbereich (11) mit unterschiedlicher Wickelrichtung unterteilt sind, zwischen denen eine etwa U-förmig ausgebildete Umkehrstelle (13) liegt, bei welcher zwischen den beiden Wickelbereichen (11,12) ein einteiliger, ringförmig gestalteter und die Umkehrstelle (13) der Windungen umfassender Führungskörper (14) angebracht ist, der in Umfangsrichtung der Kassette (K) bewegbar ist und bei dem zumindest die innere Umfangsfläche als Anlage für die Windungen des inneren Wickelbereichs (12) ausgebildet ist, und bei welcher die innere Umfangsfläche des Führungskörpers (14) über den ganzen Umfang verteilt radial nach außen vorstehende und in Umfangsrichtung gegeneinander versetzte Vorsprünge (15) hat, **dadurch gekennzeichnet**, daß an den Vorsprüngen (15) radial vorstehende Kugelkalotten (19) angebracht sind.

## Claims

1. Device for transmitting signals between two end points (6,8) at least one of which is movable relative to the other and which are connected by at least one cable (10) extending in turns, to which cable are connectable cables (5,7) leading to the two end points (6,8), wherein the cable (10) is housed in a casing (K) of substantially annular configuration which comprises a stator carrying one of the two end points and a rotor which is rotatable relative to the stator on the axis of the rotor and stator and which carries the other end point, wherein the turns of the conductor (10) are divided into an inner winding area (12) and an outer winding area (11) in which the directions of winding are different, between which areas there is an approximately U-shaped point of reversal (13), wherein, mounted between the two winding areas (11, 12), there is a one-piece former (14) of annular configuration which encloses the point of reversal (13) of the turns and which is movable in the circumferential direction of the casing (K) and of which at least the inner circumferential surface is formed as a support for the turns in the inner winding area (12), and wherein the inner circumferential surface of the former (14) has, distributed around its entire circumference, projections (15) which project out radially and which are offset from one another in the circumferential direction, **characterised in that** segments of spheres (19) which project radially are mounted on the projections (15).

## Revendications

1. Dispositif de transfert de signal entre deux points terminaux (6, 8) dont au moins un des deux est mobile par rapport à l'autre et qui sont reliés entre eux par au moins un câble (10) à enroulements qui permet le raccordement de conducteurs de prolongation (5, 7) aux deux points terminaux (6, 8), un dispositif dans lequel le câble de liaison (10) est enfermé dans une cassette (K) dont la forme essentielle est un anneau et qui est constituée d'un stator portant un des deux points terminaux et d'un rotor qui tourne sur son axe par rapport au stator et porte le deuxième point terminal, un dispositif où les enroulements du câble (10) se partagent en une zone d'enroulement interne (12) et une zone d'enroulement externe (11) qui possèdent des sens d'enroulement opposés, entre ces deux zones se trouve un point de retournement (13) ayant à peu près la forme d'un U, un dispositif comportant un corps de guidage (14) composé d'une seule pièce de forme annulaire et situé entre les deux zones d'enroulement (11, 12) et englobant le point de retournement (13) des enroulements et pouvant se déplacer en rotation dans l'enveloppe circulaire de la cassette (K), le corps de guidage (14) sert, au moins sur sa face d'enveloppe interne, de surface d'appui pour les enroulements de la zone d'enroulement interne (12), et un dispositif où la surface d'enveloppe interne du corps de guidage (14) comporte des saillies (15) radiales réparties sur toute la périphérie en alternance et sans opposition entre elles, **dispositif caractérisé par la fait** que les saillies (15) possèdent dans le sens radial des calottes à bille (19).
